# EUROPEAN PATENT SPECIFICATION

(11) **EP 0 808 006 B1**
(45) Date of publication and mention of the grant of the patent: **18.08.2004**
(21) Application number: 97201026.8
(22) Date of filing: 11.04.1997
(51) Int. Cl.: H02B 1/21

(54) **An electrical distribution board for medium-power switches**
Ein elektrisches Schaltfeld für Mittelleistungsschalter
Un tableau de distribution électrique pour interrupteurs de moyenne puissance

(30) Priority: 18.04.1996 IT MI960749
(43) Date of publication of application: 19.11.1997
(73) Proprietor: BTICINO S.P.A., 20154 Milano (IT)
(72) Inventor: Fabrizi, Fabrizio, 24100 Bergamo (IT)
(74) Representative: Maggioni, Claudio

(56) References cited:
- EP-A- 0 594 544
- WO-A-93/02497
- DE-U- 1 905 583
- US-A- 5 067 043

## Description

The present invention relates to electrical-energy distribution boards and, more particularly, to an electrical distribution board comprising one or more medium-power switches, bus bars for distributing electrical energy, and means for connecting the switch or switches to the bars.

In some applications, both domestic and industrial, small electrical distribution boards containing a few medium- power switches, that is, switches which can control currents of between 60 and 160 A, are used. In order to mount these switches, it is necessary to provide suitable support and fixing means, to make the necessary electrical connections (with wires or copper strips) between the input connectors of the switches and the bus bars, which are normally arranged along a vertical side of the board, and to fit a panel for isolating the internal portion of the board containing the bars and the connecting wires from its front portion.

EP 0 594 544 A1 discloses an electrical distribution board as depicted in the preamble of claim 1 of the present patent application.

The object of the present invention is to propose an electrical distribution board for which the mounting operations, both with regard to the fixing of the switches and with regard to their electrical connections to the bars, are quicker and easier than those required with known electrical distribution boards.

This object is achieved, according to the invention, as depicted in the appended claims.

The invention will be understood better from the following detailed description of an embodiment thereof, given by way of non-limiting example with reference to the appended drawings, in which:
Figure 1 is a front view of a board according to the invention with three switches, of which some are in the mounting stage,
Figure 2 is a perspective view of a structure for connection between a switch and the bars of a board according to the invention, with parts separated and not to scale with Figure 1,
Figure 3 is a plan view of the structure of Figure 2, and
Figures 4 and 5 show two details of the structure of Figure 3, on an enlarged scale and in section.

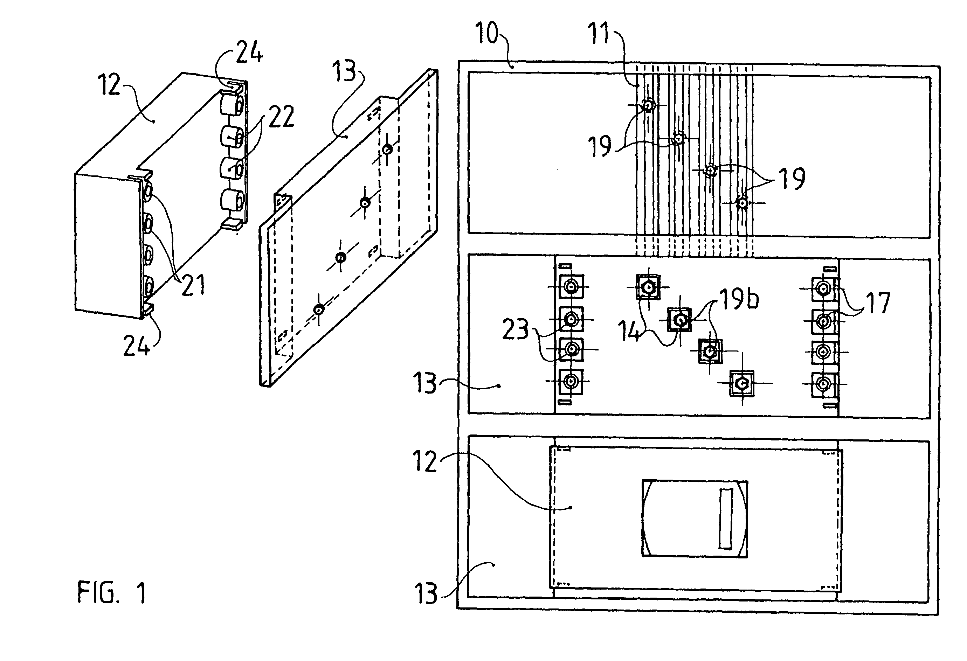

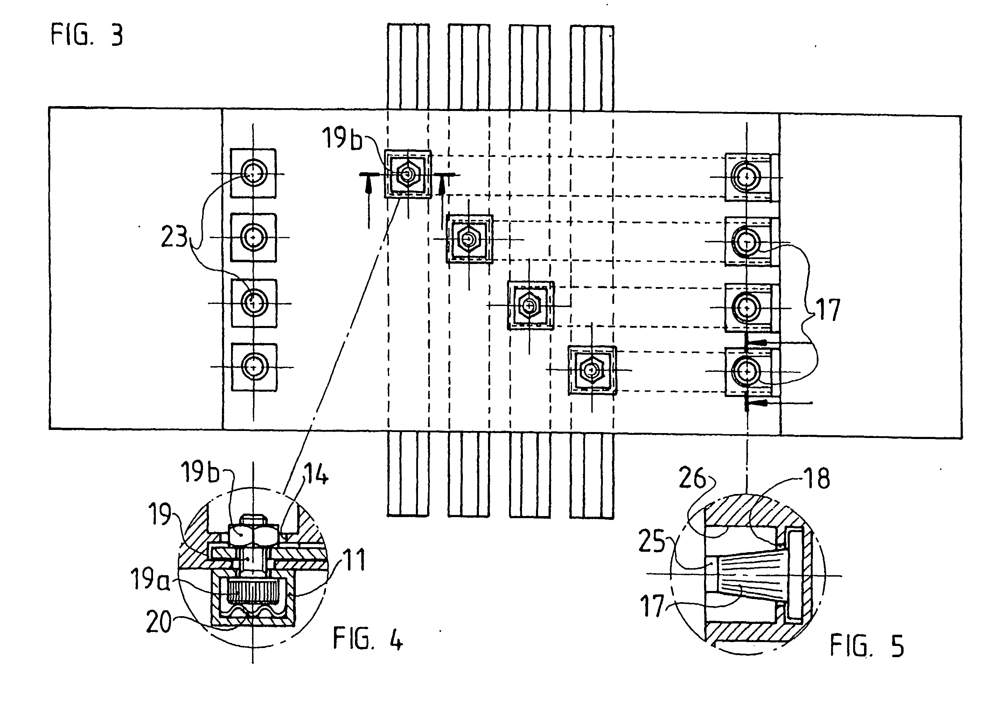

As can be seen in Figure 1, an electrical distribution board 10 with a box-like structure to be mounted on, or flush-mounted in, a wall has, as can best be seen in Figure 4, channel-sectioned bus bars 11, arranged parallel to one another and to the back wall of the board.

The board 10 comprises three power switches 12 of which one is shown mounted and one during the mounting stage. Each switch 12 is connected to the bars 11 through a base plate 13 of insulating, for example, plastics material which extends across the entire width of the board.

In this embodiment, since the plate 13 extends across the entire width of the board, it enables the internal portion of the board which contains uncovered, normally live, electrical conductors to be separated completely from its front portion which is accessible for the mounting of the switches and for normal maintenance operations.

Each base plate 13 has four through-holes 14 which are square in this embodiment and which, when the plate is mounted, are disposed in the regions of respective bars 11.

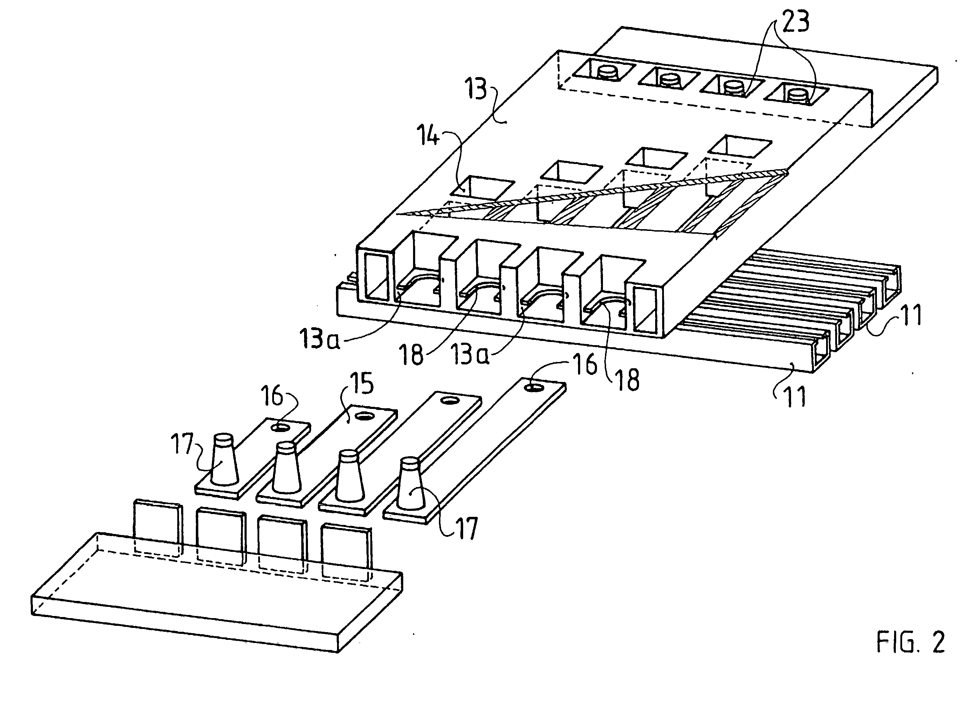

The connecting means between the switches and the bars also comprise four rigid electrical conductors, in this embodiment, copper strips 15 which are fixed to the base plate 13 since they are inserted in suitable seats 13a provided inside the plate, as shown in Figure 2. The strips 15 are of different lengths and, once mounted in the plate 13, each is disposed with a first end in the region of a hole 14 and with its second end aligned with the second ends of the others. The first end has a through-hole 16 and the second end has an electrical connection member, in this embodiment, a frusto-conical copper appendage 17 welded to the strip 15. This appendage 17 projects from the base plate 13 through a hole 18 in the wall opposite that which bears on the bars 11.

Electrical and mechanical connection members, in the form of bolts 19 in this embodiment, releasably join the base plates 13, with the incorporated strips 15, to the bars 11. In particular, each of the bolts 19 extends through a hole 16 in a strip 15 and has a head 19a which engages the inner walls of the channel-sectioned bar, as well as a nut 19b which is accessible through the holes 14 in the plate 13 in order to be screwed up and tightened. The strips 15, and hence also the plate 13, are thus fixed to the bars 11.

In this embodiment, the head of the bolt 19 is rectangular with one side narrower and one side wider than the slots in the channel-sectioned bars 11, so that it can be inserted in the bar and then brought to a position of anchorage to the bar by rotation through 90°. Moreover, a resilient element, in this case, a plate spring 20 fixed in the respective bar 11, is associated with each bolt. This measure enables the bolt to be placed and held in position before and during the fitting of the plate 13, facilitating assembly and, at the same time, allowing the bolts to move along the bars so that the plate can be positioned at the desired height.

Once the plate 13 is mounted and the nuts 19b have been tightened, as can be seen in Figure 1, it is possible to mount on the plate a standard switch 12 of which one side has four electrical input connectors, in this embodiment four socket connection elements 21 of a shape fitting that of the connection elements or copper appendages 17 fixed to the strips 11 and projecting from the plate 13, and of which the other side has four electrical output connectors, in this embodiment four socket connection elements 22 of a shape fitting that of four connection elements, not shown in detail, projecting from the plate for connection to the terminals of the electrical network controlled by the switch. The switch 12 is further supported and held in position on the plate 13 by means of suitable snap coupling elements 24, merely sketched in the drawing.

As shown in Figure 5, the copper appendages 17 have plates 25 of insulating, for example, plastics material fixed to their ends, for example, by a suitable fixing and the plates 13 are shaped in a manner such that each of the appendages 17 is disposed inside a cavity 26 of dimensions such that only a narrow space remains between the conductive surface of the appendage 17 and the insulating surfaces of the plate 13. This space is wide enough to house the connectors 21 of the switches but is narrow enough to make it impossible for people employed to mount the switches or carry out maintenance of the electrical distribution board to contact the live electrical conductors accidentally.

## Claims

1. An electrical distribution board comprising at least one medium-power switch (12), bus bars (11) for distributing electrical energy, and means (13, 15, 19) for connecting the switch (12) to the bars (11),
wherein
the bars (11) are arranged, substantially parallel to one another, in a plane substantially parallel to the back wall of the board, and wherein
the connecting means comprise:
- a base (13) of insulating material disposed between the switch (12) and the bars (11) and having a hole (14) in the region of each bar (1),
- substantially rigid electrical conductors (15) fixed to the base (13), insulated from one another, and each having a first end in the region of a hole (14) in the base and a second end having means (17) for connection to an electrical connector (21) of the switch (12), and
- electrical and mechanical connection members (19) which releasably join the first end of each electrical conductor (15) to a respective bar (11)
**characterised in that**
the bars (11) are channel-sectioned and thus have a longitudinal slot, the slot facing towards the front of the board, and in which each electrical and mechanical connection member (19) has anchoring means (19a) which engage a bar (11) by extending through the slot, and clamping means (19b) which engage the first end of one of the electrical conductors (15), and **in that**
resilient means (20) are associated with the anchoring means (19a) for keeping the anchoring means (19a) in position on the respective bars (11), independently of the clamping means (19b).

2. An electrical distribution board according to Claim 1, in which the electrical connectors of the switch (12) are socket connection elements (21) and the connection means (17) of the second ends of the electrical conductors (15) fixed to the base (13) are connection elements fitting the socket connection elements (21) of the switch (12).

3. An electrical distribution board according to Claim 2, in which respective end portions (25) of insulating material are associated with the connection elements (17) which fit the socket connection elements (21) of the switch (12), and in which the base (13) of insulating material is shaped in a manner such that each of the fitting connection elements (17) is disposed inside a cavity (26) of the plate (13).

4. An electrical distribution board according to any one of the preceding claims, in which the base (13) of insulating material extends across the entire width of the board.

## Patentansprüche

1. Elektrisches Schaltfeld, das wenigstens einen Mittelleistungsschalter (12), Busschienen (11) zum Verteilen der Elektroenergie und Einrichtungen (13, 15, 19) zum Anschließen des Schalters (12) an den Schienen (11) umfasst, wobei
die Schienen (11) im Wesentlichen parallel zueinander in einer im Wesentlichen zu der Rückwand des Schaltfeldes parallelen Ebene angeordnet sind und wobei
die Anschlusseinrichtungen Folgendes umfassen:
- eine Grundplatte (13) aus isolierendem Material, die zwischen dem Schalter (12) und den Schienen (11) angeordnet ist und die in dem Bereich jeder Schiene (11) ein Loch aufweist,
- im Wesentlichen steife Stromleiter (15), an der Grundplatte (13) befestigt, isoliert voneinander und jeder ein erstes Ende in dem Bereich eines Lochs (14) in der Grundplatte und ein zweites Ende mit Einrichtungen (17) zum Anschließen an einen elektrischen Verbinder (21) des Schalters aufweisend, und
- elektrische und mechanische Verbindungselemente (19), die das erste Ende jedes elektrischen Verbinders (15) lösbar mit einer einzelnen Schiene verbinden, **dadurch gekennzeichnet, dass**
die Schienen (11) U-profilförmig sind und daher einen Längsschlitz aufweisen, der Schlitz in Richtung auf die Vorderseite des Schaltfeldes weist und wobei jedes elektrische und mechanische Verbindungselement (19) Verankerungselemente (19a) aufweist, die durch Erstrecken durch den Schlitz und durch Einspanneinrichtungen (19b), die in die ersten Enden des elektrischen Stromleiters (15) eingreifen, mit einer Schiene (11) in Eingriff kommen und **dadurch gekennzeichnet, dass**
Federelemente (20) mit den Verankerungselementen (19) verbunden sind, so dass die Verankerungselemente (19a) unabhängig von den Einspanneinrichtungen (19b) in der Position auf den jeweiligen Schienen (11) gehalten werden.

2. Elektrisches Schaltfeld, wobei die elektrischen Verbinder des Schalters (12) Anschlussbuchsenelemente (21) sind und die Verbindungseinrichtungen (17) der zweiten Enden, der an der Grundplatte befestigten elektrischen Stromleiter (15) in die Anschlussbuchsenelemente (21) des Schalters (12) passende Verbindungselemente sind.

3. Elektrisches Schaltfeld nach Anspruch 2, wobei die jeweiligen Endabschnitte (25) des Isolationsmaterials mit den Verbindungselementen (17), die in die Anschlussbuchsenelemente (21) des Schalters (12) passen, verbunden sind und wobei die Grundplatte (13) aus isolierendem Material auf eine solche Art und Weise geformt ist, dass jedes Ende der passenden Verbindungselemente (17) in einer Kavität (26) der Grundplatte (13) angeordnet ist.

4. Elektrisches Schaltfeld nach einem der vorangehenden Ansprüche, wobei sich die Grundplatte (13) aus isolierendem Material über die gesamte Breite des Schaltfeldes erstreckt.

## Revendications

1. Tableau de distribution électrique comprenant au moins un interrupteur de moyenne puissance (12), des barres conductrices du courant (11) destinées à distribuer une énergie électrique, et un moyen (13, 15, 19) destiné à connecter l'interrupteur (12) aux barres (11) dans lequel
les barres (11) sont adaptées, essentiellement parallèles les unes aux autres, sur un plan essentiellement parallèle au mur situé dos au tableau, et dans lequel
le moyen de connexion comprend :
- une base (13) d'un matériau isolant placé entre l'interrupteur (12) et les barres (11) et présentant un trou (14) aux environs de chaque barre (11),
- des conducteurs électriques (15) essentiellement rigides fixés à la base (13), isolés les uns des autres, et présentant chacun une première extrémité aux environs d'un trou (14) dans la base et une deuxième extrémité présentant un moyen (17) pour une connexion à un connecteur électrique (21) de l'interrupteur (12), et
- des éléments de connexion électriques et mécaniques (19) qui joignent librement la première extrémité de chacun des conducteurs électriques (15) à une barre respective (11), **caractérisés en ce que**
les barres (11) sont sectionnées en canaux et présentent ainsi une fente longitudinale, la fente faisant face au devant du tableau, et dans lesquelles chaque élément de connexion électrique et mécanique (19) présente un moyen d'ancrage (19a) qui engage une barre (11) par extension à travers la fente, et un moyen de serrage (19b) qui engage la première extrémité de l'un des conducteurs électriques (15), et **en ce qu'**un moyen élastique (20) est associé au moyen d'ancrage (19a) pour laisser le moyen d'ancrage (19a) en position sur les barres (11) respectives, indépendamment du moyen de serrage (19b).

2. Tableau de distribution électrique selon la revendication 1, dans lequel les connecteurs électriques de l'interrupteur (12) sont des éléments de connexion de prise (21) et le moyen de connexion (17) des deuxième extrémités des conducteurs électriques (15) fixés à la base (13) sont des éléments de connexion fixant les éléments de connexion de prise (21) de l'interrupteur (12).

3. Tableau de distribution électrique selon la revendication 2, dans lequel les parties d'extrémité respectives (25) du matériau isolant sont associées aux éléments de connexion (17) qui fixent les éléments de connexion de prise (21) de l'interrupteur (12), et dans lequel la base (13) du matériau isolant est formée de telle manière que chaque élément de connexion de fixation (17) est disposé à l'intérieur d'une cavité (26) de la plaque (13).

4. Tableau de distribution électrique selon l'une quelconque des revendications précédentes, dans lequel la base (13) du matériau isolant s'étend sur la largeur totale du tableau.
